# EUROPEAN PATENT APPLICATION

(11) **EP 2 211 169 A1**
(43) Date of publication of application: **28.07.2010**
(21) Application number: 08844647.1
(22) Date of filing: 31.10.2008
(51) Int. Cl.: G01N 27/26, G01N 27/416

(54) **CONTROL LIQUID IDENTIFYING METHOD AND ANALYSIS DEVICE**

(30) Priority: 31.10.2007 JP 2007282784
(71) Applicant: ARKRAY, Inc., Minami-ku Kyoto-shi Kyoto 601-8045 (JP)
(72) Inventor: OKAMI, Akiko, Kyoto-shi Kyoto 601-8045 (JP); MATSUDA, Hirokazu, Kyoto-shi Kyoto 601-8045 (JP)
(74) Representative: HOFFMANN EITLE
(86) International application number: PCT/JP2008/069984
(87) International publication number: WO 2009/057794

(57) **Abstract**

Disclosed is a method of distinguishing between a specimen and a control solution in a system for analyzing a specific component within the specimen using an analysis tool. The distinguishing method includes a first step (S2) of measuring a response value when a voltage is applied between first and second electrodes of the analysis tool, a second step (S3) of comparing a maximum value of the response value or a value associated with the maximum value to a predetermined threshold value, and a third step (S4) of distinguishing between the specimen and the control solution based on the result of the comparison between the maximum value or the associated value and the threshold value.

## Description

### Technical Field

The present invention relates to a method of distinguishing between a specimen and a control solution and an analyzer when a specific component within the specimen is analyzed.

### Background Art

Knowledge of biological information, such as the glucose concentration of blood, is important in diagnosing and treating various diseases. As a method of obtaining the biological information within blood, there is a method of using an analysis tool such as a biosensor. In this method, a blood specimen is supplied to a reaction reagent layer provided in the analysis tool to cause reaction between the blood specimen and the reagent, and information regarding the concentration of a specific component within the blood specimen is detected by a concentration measurement apparatus using an electrochemical technique or an optical technique based on the product of the reaction.

In order to guarantee reliability of the measurement results in such concentration measurement apparatus, it is necessary to determine whether or not the apparatus is operating normally when the apparatus has not been used for a long time or on a regular basis. Typically, the inspection of the concentration measurement apparatus is performed such that an operator manipulates the concentration measurement apparatus to manually select a control solution measurement mode and installs the analysis tool in the apparatus to supply the control solution to the analysis tool.

In this method, the burden on the operator is significant because it is necessary to manipulate the apparatus to perform an operational inspection, as well as return the apparatus to normal measurement mode after completing the inspection of the apparatus. In addition, inspection of the apparatus may be performed without changing the status of the apparatus from normal measurement mode to control solution measurement mode or, conversely, measurement of the specimen may be performed without changing the status of the apparatus from the control measurement mode to normal measurement mode. As a result, this gives rise to the disadvantage that it may be impossible to obtain an accurate inspection result or measurement result, or to repeatedly perform the inspection or measurement. In addition, when the operator performs management of the measurement values, unnecessary measurement results for the control solution may includes in the management data, so that it may be impossible to appropriately perform management of the measurement values.

In order to address such difficulties, performing the inspection of the apparatus by automatically recognizing the control solution in the concentration measurement apparatus has been proposed (for example, refer to Patent Documents 1 to 3).

The method disclosed in Patent Document 1 focuses on the difference in the solubility of the reaction reagent layer between whole blood and the control solution, and distinguishes between whole blood and the control solution based on the difference in the measurement electric current value between the whole blood and the control solution.

Similar to Patent Document 1, Patent Document 2 discloses a method of distinguishing between whole blood and the control solution based on the difference in the measurement electric current value in a measurement system using an electrochemical technique.

According to the method disclosed in Patent Document 3, in the measurement system using an electrochemical technique, a detection electrode, as well as a reactive electrode and a counter electrode, are provided in an electrode type biosensor, and the control solution is automatically distinguished based on an oxidation current obtained from the detection electrode. The method disclosed in Patent Document 3 focuses on a fact that the behavior of the oxidation current obtained when the control solution reacts on the reagent reaction layer of the biosensor is different from the behavior of the oxidation current obtained when the specimen reacts on the reaction reagent layer, and the specimen and the control solution are automatically distinguished based on the oxidation current value at a specified time period elapses or an aging variation of the oxidation current value.

However, according to the methods disclosed in Patent Documents 1 to 3, the specimen and the control solution are distinguished based on the aging variation of the reaction electric current. Therefore, it is difficult to distinguish between the control solution having plural concentrations and the specimen having plural concentrations. Particularly, when the glucose in a blood specimen is measured, since the reaction electric current is influenced by the hematocrit value, it is difficult to distinguish between the control solution and the blood specimen having various concentrations and hematocrits.

[Patent Document 1] Japanese Patent Application Laid-Open (JP-A) No. 2003-114214
[Patent Document 2] JP-A No. 2005-531760
[Patent Document 3] JP-A No. 2001-208718

### Disclosure of Invention

### Problem to be Solved by the Invention

The present invention has been made to accurately distinguish the control solution while alleviating the burden on the operator and preventing erroneous measurements. Means for Solving the Problem

A first aspect of the present invention is a method of distinguishing between a control solution and a specimen in a system of analyzing a specific component within the specimen using an analysis tool, the method including: a first step of measuring a response value when a voltage is applied between first and second electrodes in the analysis tool; a second step of comparing a maximum value of the response value or a value associated with the maximum value to a predetermined threshold value; and a third step of distinguishing between the specimen and the control solution based on a comparison result between the maximum value or the associated value and the threshold value.

Here, in the present invention, unless specified otherwise, the response value includes an electric current value and a voltage value, the maximum value includes a maximal value and/or one or more peak values, and the associated value includes an average and/or an integration of the maximum values when plural maximum values are present.

In the first step, for example, a voltage having a waveform including at least one pulse is applied. Preferably, in the first step, a voltage having a waveform including plural pulses, for example, a voltage having an alternating waveform is applied. Here, the alternating waveform means a waveform in which a value is periodically changed, and is not necessarily limited to a case where the value is alternated between positive and negative values.

The analysis tool may further include third and fourth electrodes which are used to analyze the specimen.

The specimen is, for example, whole blood, and the control solution contains an electrolyte such as sodium chloride having a higher concentration than that of whole blood.

A second aspect of the present invention is an analyzer that analyzes a specific component within a specimen using an analysis tool, the analyzer including: a power source that applies a voltage between first and second electrodes in the analysis tool; a measurement unit that measures a response value when a voltage is applied between the first and second electrodes; and a computation unit that distinguishes between the specimen and the control solution by comparing the maximum value of the response value or a value associated with the maximum value to a predetermined threshold value.

The power source is, for example, an AC power source.

### Brief Description of the Drawings

Fig. 1 is a perspective view illustrating an example of the entire analysis system as a target of a method of distinguishing a control solution according to the present invention.
Fig. 2 is a perspective view illustrating an example of the biosensor used in the analysis system of Fig. 1.
Fig. 3 is a cross-sectional view along the line III-III of Fig. 2.
Fig. 4 is an exploded perspective view illustrating the biosensor of Fig. 2.
Fig. 5 is a cross-sectional view along the line V-V of Fig. 1.
Fig. 6 is a block diagram illustrating an analysis system of Fig. 1.
Fig. 7 is a flowchart for describing a method of automatically distinguishing the control solution according to the present invention.
Figs. 8A and 8B are graphs illustrating an example of the response electric current and the voltage applying pattern to the detection electrode of the biosensor.
Figs. 9A and 9B are graphs illustrating another example of the voltage applying pattern to the detection electrode of the biosensor.
Figs. 10A and 10B are graphs illustrating still another example of the voltage applying pattern to the detection electrode of the biosensor.
Figs. 11A to 11C are graphs illustrating measurement results of the output voltage and the voltage applying pattern to the detection electrode of the biosensor in Example 1.
Figs. 12A to 12C are graphs illustrating an average value of plural output peaks in the time course of the output voltage (the response electric current) in Example 2.
Figs. 13A to 13F are graphs illustrating measurement results of the output voltage (the response electric current) in Example 3.
Fig. 14 is a graph illustrating an average value of the peak values obtained by performing plural measurements of the output voltage (the response electric current) in Example 3.

### Explanation of References

1: ANALYZER
2: BIOSENSOR (ANALYSIS TOOL)
24: ELECTRODE (THIRD ELECTRODE)
24A: REACTIVE ELECTRODE
25: ELECTRODE (FOURTH ELECTRODE)
25A: COUNTER ELECTRODE
26,27: ELECTRODE (FIRST AND SECOND ELECTRODES)
26A, 27A: DETECTION ELECTRODE

### Best Mode for Carrying out the Invention

Hereinafter, the present invention will be described in detail with reference to the accompanying drawings.

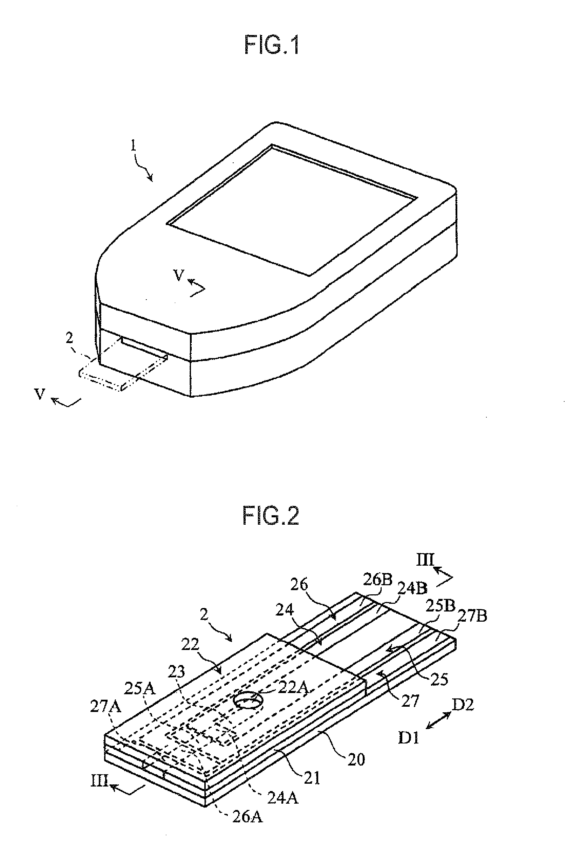

An analyzer 1 shown in Fig. 1 is constructed to measure a concentration of a specific component within a specimen using a biosensor 2.

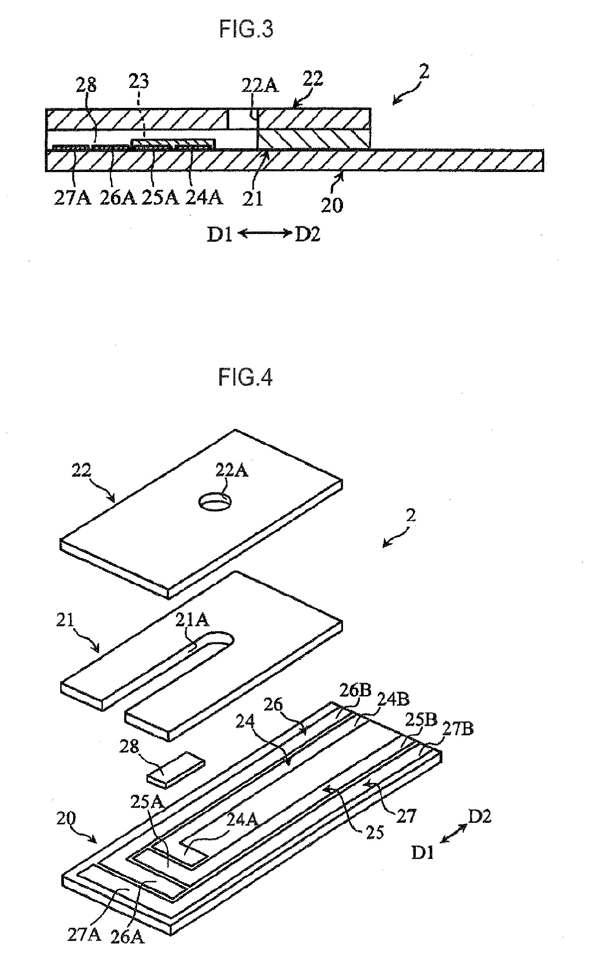

As shown in Figs. 2 to 4, the biosensor 2 is configured to be a disposable device and has a flat panel shape overall. This biosensor 2 is configured such that a cover 22 is bonded to a substrate 20 having an approximately rectangular shape with a spacer 21 interposed therebetween. In the biosensor 2, a capillary 23 extending in a longitudinal direction D1 and D2 of the substrate 20 is defined by each of the components 20 to 22.

The spacer 21 defines the height of the capillary 23 and is configured of, for example, a double-face adhesive tape or a hot-melt adhesive. The spacer 21 is provided with a slit 21A that defines the width of the capillary 23.

The cover 22 has an air vent 22A for discharging air inside the capillary 23 to the exterior. The cover 22 is formed of, for example, thermoplastic resin having a high wettability such as vinylon or high-crystalline PVA.

The substrate 20 is formed of an insulating resin material to be larger than the cover 22, and has electrodes 24, 25, 26, and 27 and a reagent layer 28 formed on its upper surface.

The electrodes 24 and 25 are used to analyze the specimen such as blood introduced into the capillary 23. The electrode 24 includes a reactive electrode 24A, and the electrode 25 includes a counter electrode 25A. The reactive electrode 24A and the counter electrode 25A are used to apply a voltage to the specimen introduced into the capillary 23 and are exposed to the capillary 23.

The electrodes 26 and 27 are used to determine whether or not the liquid introduced into the capillary 23 is a control solution. The electrodes 26 and 27 have detection electrodes 26A and 27A. The detection electrodes 26A and 27A are used to apply a voltage to the liquid introduced into the capillary 23 and are exposed to the capillary 23.

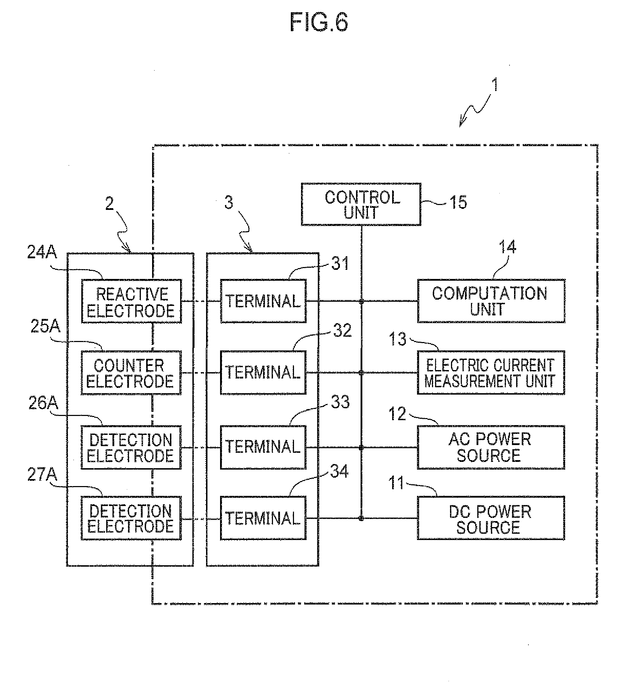

The electrodes 24 to 27 have end portions 24B, 25B, 26B, and 27B that contact with the terminals 31 to 34 (refer to Fig. 6) of the analyzer 1 when the biosensor 2 is installed in the analyzer 1, which will be described below.

A reagent layer 28 is provided to cover the reactive electrode 24A and the counter electrode 25A, and is arranged inside the capillary 23. The reagent layer 28 contains, for example, an oxidoreductase and an electron carrier material, and is formed in a solid state that may readily dissolved in the specimen such as blood or the control solution.

The oxidoreductase is selected depending on the type of the analysis target component within the specimen. For example, when glucose is analyzed, glucose oxidase (GOD) or glucose dehydrogenase (GDH) may be used, and typically, PQQGDH is used.
The electron carrier material may include, for example, a ruthenium complex or an iron complex, and typically [Ru(NH₃) ₆]Cl₃ or K₃[Fe(CN) ₆] can be used.

The capillary 23 transport a liquid (specimen or control solution) toward the air vent 22A using a capillary action and retains the introduced liquid. When the liquid is introduced inside the capillary 23, the reagent layer 28 is dissolved and a liquid-phase reaction system is formed including the oxidoreductase, the electron carrier material, and the liquid inside the capillary 23.

Here, the specimen includes a biochemical specimen such as blood, urine, or saliva, and the specific component functioning as the analysis target in the specimen includes glucose, cholesterol, or lactic acid.

The control solution includes a specific component such as glucose, a buffer solution, and electrolyte.

The buffer solution may include any material having a buffering ability within a targeted pH range, such as benzoate, tris, or 2-morpholino ethane sulphonic acid (MES).

For example, sodium chloride is employed as the electrolyte when the specimen is a biochemical specimen such as blood. The concentration of the sodium chloride within the control solution is set to, for example, be equal to or larger than 100 mM, and preferably, equal to or larger than 300 mM. Here, when the concentration of the electrolyte within the control solution, for example, the concentration of sodium chloride is set to be large, it is possible to increase the response when an alternating current (AC) voltage is applied to the electrodes 26 and 27 (i.e., the detection electrodes 26A and 27A).

A viscosity thickener, an antiseptic agent, or pigment may be added to the control solution. The viscosity thickener may include various materials known in the art, such as polyvinyl alcohol (PVA) or echo gum (xanthane gum). The antiseptic agent may include various materials known in the art, such as isothiazolone. The pigment may include a material capable of coloring the control solution, and, for example, food pigments such as food pigment red Nos. 40 and 106 and a food pigment blue No. 1.

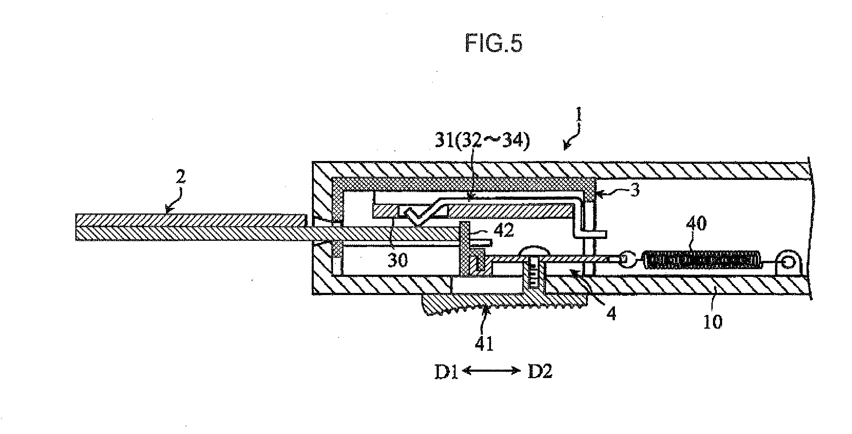

As shown in Figs. 5 and 6, the analyzer 1 includes a connector unit 3 and a disposal mechanism 4.

The connector unit 3, where the biosensor 2 is installed, includes plural terminals 31, 32, 33, and 34 mounted on a terminal block 30.

The terminals 31 and 32 are used to apply a voltage between the reactive electrode 24A and the counter electrode 25A of the biosensor 2, and contact with the end portions 24B and 25B of the electrodes 24 and 25 when the biosensor 2 is installed to the connector unit 3. Meanwhile, the terminals 33 and 34 are used to apply a voltage between the detection electrodes 26A and 27A of the biosensor 2, and contact with the end portions 26B and 27B of the electrodes 26 and 27 when the biosensor 2 is installed to the connector unit 3.

Each of the terminals 31 to 34 has a leading end configured of a plate spring in order to appropriately retain the biosensor 2 with respect to the connector unit 3 when the biosensor 2 is installed to the connection unit 3.

The disposal mechanism 4 is provided to dispose the used biosensor 2 from the analyzer 1. The disposal mechanism 4 has a manipulation lever 41 urged by the coil spring 40.

The manipulation lever 41 is a part manipulated to move a pressing body 42 that extrudes the biosensor 2, and can reciprocate in the directions D1 and D2 with respect to the casing 10 while a part thereof is exposed from the casing 10.

As shown in Fig. 6, the analyzer 1 further includes a DC power source 11, an AC power source 12, an electric current measurement unit 13, a computation unit 14, and a control unit 15.

The DC power source 11 applies a voltage between the reactive electrode 24A and the counter electrode 25B of the biosensor 2 through the terminals 31 and 32.

The AC power source 12 applies a voltage between the detection electrodes 26A and 27B of the biosensor 2 through the terminals 33 and 34.

The electric current measurement unit 13 measures the response electric current value when a DC voltage is applied between the reactive electrode 24A and the counter electrode 25A or when an AC voltage is applied between the detection electrodes 26A and 27A.

The computation unit 14 computes the concentration of a specific component within the specimen or performs computation necessary to determine whether the liquid applied on the biosensor 2 is the control solution or the specimen based on the measurement results from the electric current measurement unit 12.

The control unit 15 controls a voltage application of the DC power source 11 and the AC power source 12, measurement timing in the electric current measurement unit 13, and various operations such as computation operations of the computation unit 14.

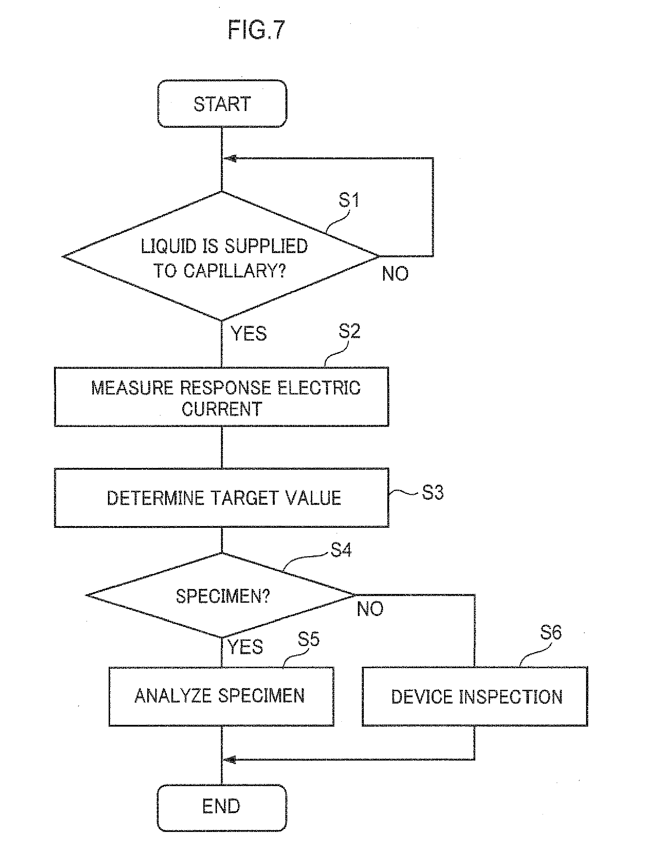

Next, an example of the operation of the analyzer 1 will be described with reference to the flowchart of Fig. 7.

As shown in Fig. 7, first, the analyzer 1 determines whether or not a liquid has been supplied to the capillary 23 of the biosensor 2 when the biosensor 2 is installed (S1). This determination is performed by detecting whether or not a liquid junction is formed between at least two electrodes of the reactive electrode 24A, the counter electrode 25A, and the detection electrodes 26A and 27A in the biosensor 2. In other words, when a liquid is supplied to the capillary 23 of the biosensor 2, the capillary 23 is filled with a liquid by a capillary action generated in the capillary 23 of the biosensor 2. Therefore, an electric current flows between two electrodes between at least two electrodes of the reactive electrode 24A, the counter electrode 25A, and the detection electrodes 26A and 27A when a voltage is applied from the DC power source 11 or the AC power source 12. As a result, it is possible detect whether or not a liquid junction is formed between two electrodes, i.e., whether or not a liquid has been supplied to the capillary 23 by measuring the response electric current in the electric current measurement unit 31 and monitoring the measurement results in the electric current measurement unit 31. Typically, the determination of whether or not a liquid has been supplied is performed by detecting whether or not a liquid junction is formed between the reactive electrode 24A and the counter electrode 25A in the downstream side of the transportation direction D2 of a liquid within the capillary 23.

If it is determined that a liquid has been supplied to the biosensor 2 (S1:YES), the control unit 15 distinguishes whether the specimen or the control solution has been supplied to the biosensor 2 (S2 to S4). If it is determined that a liquid has not been supplied to the biosensor 2 (S1:NO), the control unit 15 repetitively performs the determination of the step S 1 until it is determined that a liquid has been supplied. However, if it is determined that a liquid has not been supplied even when the determination is repeated by a predetermined number of times (S1:NO), or it is determined that a liquid has not been supplied even when a predetermined time has elapsed from the initial determination (S1:NO), an error process may be performed.

Here, if it is determined by the control unit 15 that a liquid has been supplied (S1:YES), first, the response electric current from the detection electrodes 26A and 27A is measured by the electric current measurement unit 13 at regular time intervals (S2) while a voltage is applied from the AC power source 12 between the detection electrodes 26A and 27A. The time interval for measuring the response electric current is selected from a range, for example, from 0.01 to 1 second.

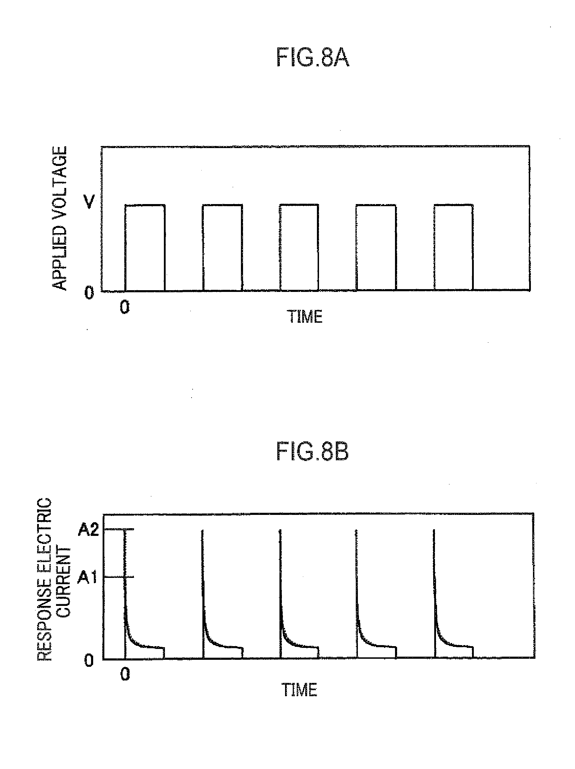

The voltage application to the detection electrodes 26A and 27A is performed, for example, using an AC waveform supplied by repeating a rectangular pulse as the pattern shown in Fig. 8A. In Fig. 8A, the time point when it is identified that a liquid has been supplied to the capillary 23 is set to 0 sec. Here, the applied voltage has, for example, a maximum value of 0.1 to 2.0 V, an application time (pulse width) of 1 to 10 sec, and a frequency of 0.1 Hz or higher.

Meanwhile, the response electric current when a voltage is applied becomes a pattern including plural pulses corresponding to the voltage application pulses as shown in Fig. 8B when the voltage application pattern is set to an AC waveform as shown in Fig. 8A. Each pulse of the response electric current has a pattern stabilized to a specific value after an abrupt rising edge, and the peak electric current value at the rising edge is different between the specimen and the control solution. For example, when whole blood is used as the specimen, and a material containing sodium chloride and a buffer solution is used as the control solution, the peak electric current value A2 of the control solution (denoted by a dashed line) is larger than the peak electric current value A1 of whole blood (denoted by a solid line). Therefore, it is possible to distinguish between the blood and the control solution based on whether the peak electric current value of the pulse in the response electric current or a value associated with the peak electric current is larger or smaller than a predetermined threshold vale.

Next, the computation unit 14 determines a comparison value for comparison with the threshold value (S3). Here, while in the voltage applying pattern shown in Fig. 8A, plural peak electric current values A1 and A2 are presented as shown in Fig. 8B, any peak electric current value may be employed as the comparison value if it can distinguish between the specimen and the control solution. In addition, a maximum or minimum value of plural peak electric current values A1 and A2 or an average or integration value of plural peak electric current values A1 and A2 may be employed as the comparison value.

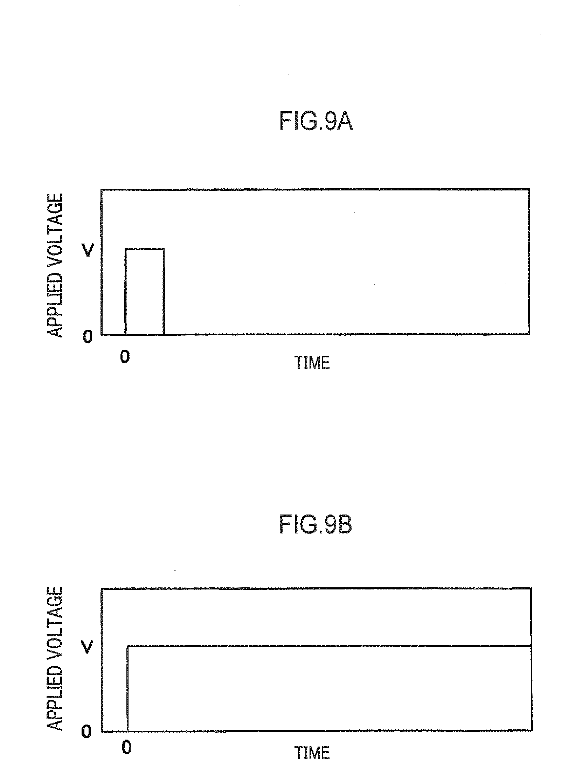

As the voltage applying pattern for distinguishing the control solution, a waveform having a single rectangular pulse may be used as shown in Fig. 9A. In this case, since the same single pulse as that shown in Fig. 8B appears as the response electric current value, it is possible to distinguish between the specimen and the control solution based on the peak electric current of this pulse or a value associated with the peak electric current. While the voltage applying pattern shown in Fig. 9A may be supplied by an AC power source 12, it may be supplied also by a DC power source 11. Therefore, when a voltage having a pattern as shown in Fig. 9A is supplied by the DC power source 11, the AC power source 12 may be omitted.

Further, as shown in Fig. 9B, a DC voltage may be supplied as the voltage applying pattern for distinguishing the control solution. Also in this case, the AC power source 12 may be omitted.

The computation unit 14 further compares the comparison value to the threshold value and determines whether the liquid introduced into the capillary 23 is the specimen or the control solution (S4). Here, the threshold value is set to, for example, a value corresponding to 70% to 80% of the maximum value of the response electric current of the control solution, or a value corresponding to 110% to 120% of the maximum value of the response electric current of the specimen.

The control unit 15 determines that the liquid introduced into the capillary 23 is the specimen if the comparison value is smaller than the threshold value (S4: YES) and determines that the liquid introduced into the capillary 23 is the control solution if the comparison value is larger than the threshold value (S4: NO).

The control unit 15 performs an analysis for a specific component within the specimen (S5) if it determines that the liquid introduced into the capillary 23 is the specimen (S4: YES). This analysis may be performed based on the response electric current value when a DC voltage is applied between the reactive electrode 24A and the counter electrode 25A from the DC power source 11. More specifically, the analysis of a specific component may be performed by applying the response electric current at the time after a predetermined time has elapsed from applying the DC voltage to a calibration curve or a reference table representing a relationship between the concentrations of the specific component and the response electric current values.

In addition, when whole blood is used as the specimen, a correction for removing the effect of the hematocrit value may be performed based on the response electric current value at the detection electrodes 26A and 27A. In this case, the correction may be performed using known techniques.

Meanwhile, the control unit 15 inspects the condition of the analyzer 1 using the control solution (S6) when it determines that the liquid introduced into the capillary 23 is the control solution (S4: NO). This inspection is performed similar to a normal specimen analysis, for example, in which it is determined that the analyzer 1 is normally operated if a specific component is within a predetermined range when the control solution is analyzed, and it is determined that the analyzer 1 has abnormality if a concentration of the specific component is not within a predetermined range.

In the analyzer 1, when the control solution is measured, an operator is not required to perform a mode selection for measuring the control solution, and thus, the burden on the operator is alleviated. In addition, since the control solution is automatically distinguished, there is no situation that the inspection of the analyzer 1 is performed without changing the status from the normal measurement mode to the control solution measurement mode or, conversely, measurement of the specimen is performed without changing the status from the control measurement mode to the normal measurement mode. As a result, it is possible to obtain accurate inspection or measurement results, while necessity of the re-inspection or the re-measurement is reduced, and when the measurement data are managed, it is possible to prevent measurement values for the control solution to be included in the management values.

The present invention is not intended to be limited to the embodiment described above. For example, the configuration of the analyzer 1 or the biosensor 2 is not limited to that has been illustrated.

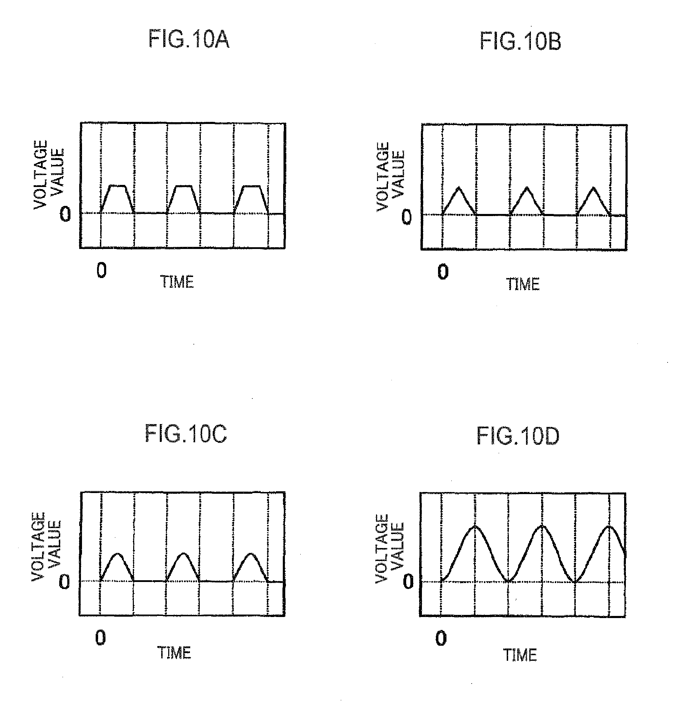

In addition, the pattern of the voltage applied to the detection electrodes 26A and 27A of the biosensor when the control solution is distinguished is not limited to the patterns shown in Fig. 8A, 9A, and 9B, and may include, for example, the patterns shown in Figs. 10A to 10D or other patterns.

Fig. 10A shows a pattern of an alternating waveform including plural trapezoidal pulses. Fig. 10B shows a pattern of an alternating waveform including plural triangular pulses. Fig. 10C shows a pattern of an alternating waveform including plural sinusoidal pulses (corresponding to a half period). Fig. 10D shows a pattern of a sinusoidal waveform. While the patterns shown in Figs. 10A to 10D are waveforms including plural pulses, the voltage patterns applied to the detection electrodes 26A and 27A may be a waveform having a single pulse.

The present invention may be further employed in an analysis system configured to optically analyze a specific component within the specimen.

### EXAMPLE 1

In this example, it was investigated whether or not the blood specimen and the control solution can be distinguished based on the maximum value of the response electric current when an AC voltage is supplied.

The measurement of the response electric current was performed using a biosensor (X-SENSOR manufactured by ARKRAY Co., Ltd.) without the reagent layer. The X-SENSOR has a pair of electrodes, and these electrodes were used as the detection electrodes.

In the control solution, in addition to a basic composition shown in Table 1 set forth below, the concentration of sodium chloride was set to 500 mM, and the concentration of glucose was set to 103 mg/dL.

In the blood specimen, the hematocrit value (Hct) was set to 40%, and the concentration of glucose was set to 120 mg/dL.

**[Table 1]**

| Basic Composition of Control Solution | |
|---|---|
| Food Pigment Blue No. 1 | 2 g |
| Proclin300 | 1 g |
| MES (pH 6.8) | 10.66 g |
| Purified Water | 1000 mL |

| | |
|---|---|
| * Proclin300: manufactured by SIGMA-ALDRICH JAPAN Co., Ltd. * MES: 2-(N-Morpholino) ethanesulfonic Acid | |

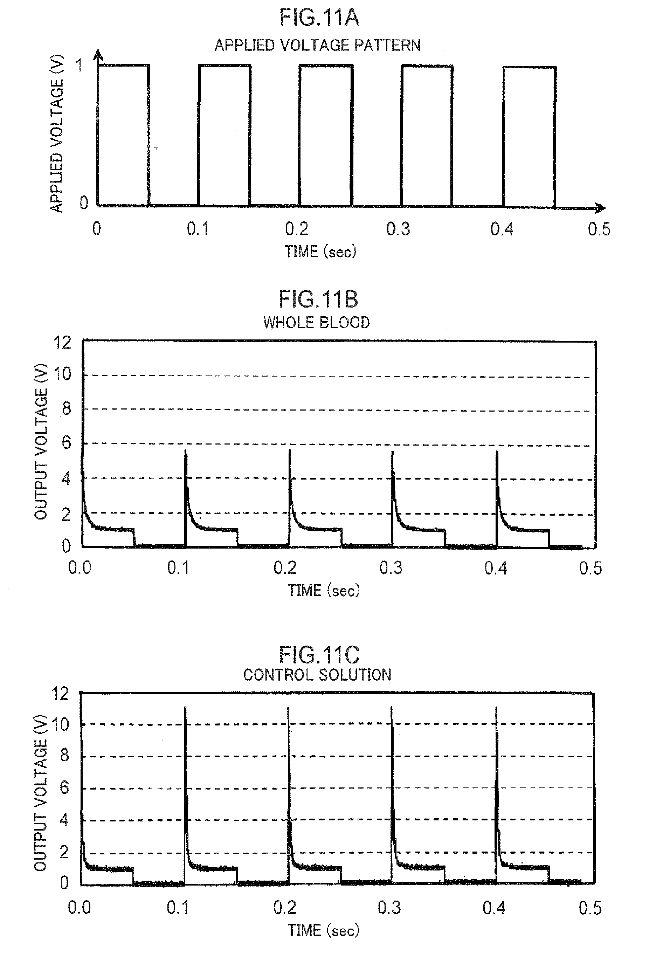

The response electric current was measured by applying a voltage having a pattern shown in Fig. 11A between a pair of electrodes (i.e., detection electrodes) of the X-SENSOR. The voltage was supplied from an AC power source with a rectangular pulse having a maximum applying voltage of 1 V and a frequency of 10 Hz. The response electric current was measured for 10 seconds with a sampling interval of 20 µsec. The measurement results of the response electric current were obtained by converting current values into voltages. While the result for whole blood is shown in Fig. 11B, and the result of the control solution is shown in Fig. 11C.

As shown in Figs. 11B and 11C, in both whole blood and the control solution, the output voltage (the response electric current) had instantaneously risen when a rectangular pulse was supplied and then be stabilized into a constant value, and it was approximately zero when the rectangular pulse is not supplied. In other words, the output voltages (the response electric currents) of whole blood and the control solution have a time course having plural peak values. Meanwhile, the peak value of output voltage (the response electric current) of the control solution was larger than that of whole blood. For this reason, it is considered possible to distinguish between the control solution and whole blood based on the peak value of the output voltage (the response electric current) when an AC voltage is applied.

In addition, it is apparent that the output voltage (the response electric current) has a peak value even when a single pulse is supplied to the detection electrode even in a case where the voltage supplied to the detection electrode is limited to the AC voltage. For this reason, it is envisaged that the control solution and whole blood can be distinguished based on the peak value even when a single pulse (corresponding to a single cycle of Fig. 11A) is supplied to the detection electrode.

### EXAMPLE 2

In this example, it was investigated whether or not it is possible to distinguish between plural control solutions having different concentrations of sodium chloride and glucose and plural types of whole blood having a different hematocrit value based on the maximum value of the response electric current when an AC voltage is supplied.

As the control solution, 9 types of control solutions were used by adding sodium chloride and glucose to have concentrations to obtain the composition shown in Table 2 below in addition to the basic composition shown in Table 1 above.

As the blood specimen, 3 types of whole blood having different hematocrit values (Hct) were used. The Hct was set to 20% (for the specimen 1), 40% (for the specimen 2), and 60% (for the specimen 3), and the concentration of glucose was set to 120 mg/dL.

**[Table 2]**

| Control Solution | | | | | | | | | |
|---|---|---|---|---|---|---|---|---|---|
| Specimen No. | 1 | 2 | 3 | 4 | 5 | 6 | 7 | 8 | 9 |
| NaCL(mM) | 100 | 300 | | | | 500 | | | |
| D-glucose (mg/dL) | 0 | 0 | 46 | 103 | 220 | 0 | 46 | 103 | 220 |

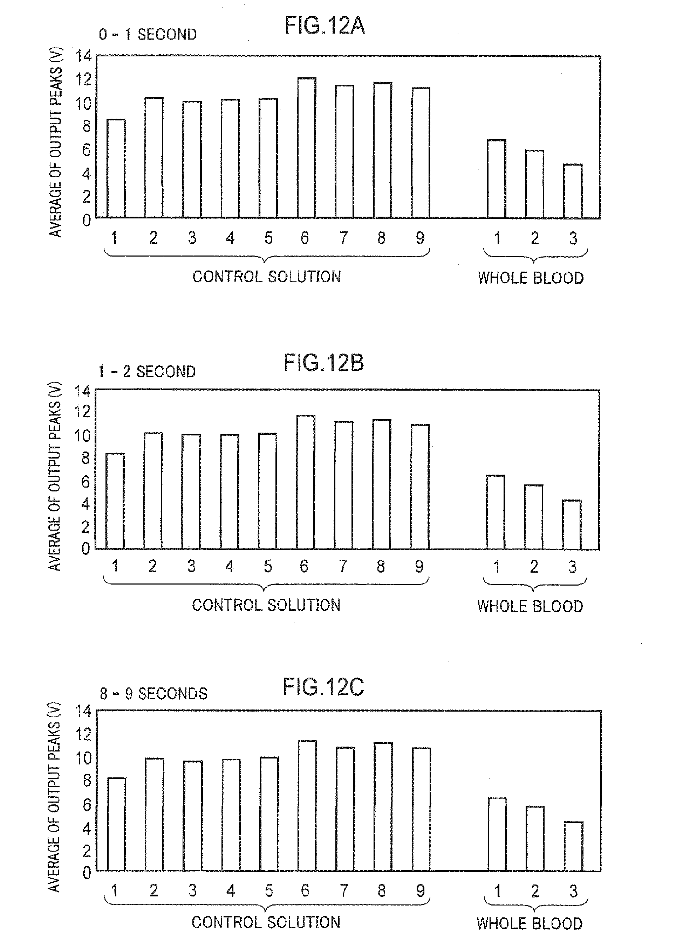

The response electric current was measured under the same condition as that of Example 1. The measurement result of the response electric current is shown in Figs. 12A to 12C as an average value of plural peak values in a time course of the output voltage which are converted from the response electric current. Fig. 12A shows an average of peak values within an interval between 0 and 1 sec from the start of the measurement. Fig. 12B shows an average of peak values within an interval between 1 and sec from the start of the measurement. Fig. 12C shows an average of peak values within an interval between 8 and 9 sec from the start of the measurement.

As can understood from Figs. 12A to 12C, regardless of the measurement time and Hct of the whole blood, the average of the control solution is larger than the average of the whole blood. For this reason, it is considered possible to distinguish between the control solution and whole blood based on any peak value in the output voltage (the response electric current) or an average of peak values.

Further, for the control solution, as the concentration of sodium chloride increases, the average value tends to increase. For this reason, in order to more appropriately distinguish between the control solution and whole blood, it is preferable to use a relatively higher concentration of sodium chloride, for example, 500 mM or higher, as the control solution.

### EXAMPLE 3

In this example, it was investigated whether or not the blood specimen and the control solution can be distinguished based on the maximum value of the response electric current when the applied voltage is set to a constant voltage (DC voltage).

As the control solution, 3 types of control solutions having a basic composition shown in Table 1 with different concentrations of glucose were used. The concentration of glucose was set to 46mg/dL (for the specimen 1), 103mg/dL (for the specimen 2), and 220mg/dL (for the specimen 3).

As the blood specimen, three types of whole blood having different hematocrit values (Hct) were used. The Hct was set to 20% (for the specimen 1), 40% (for the specimen 2), and 60% (for the specimen 3), and the concentration of glucose was set to 120 mg/dL.

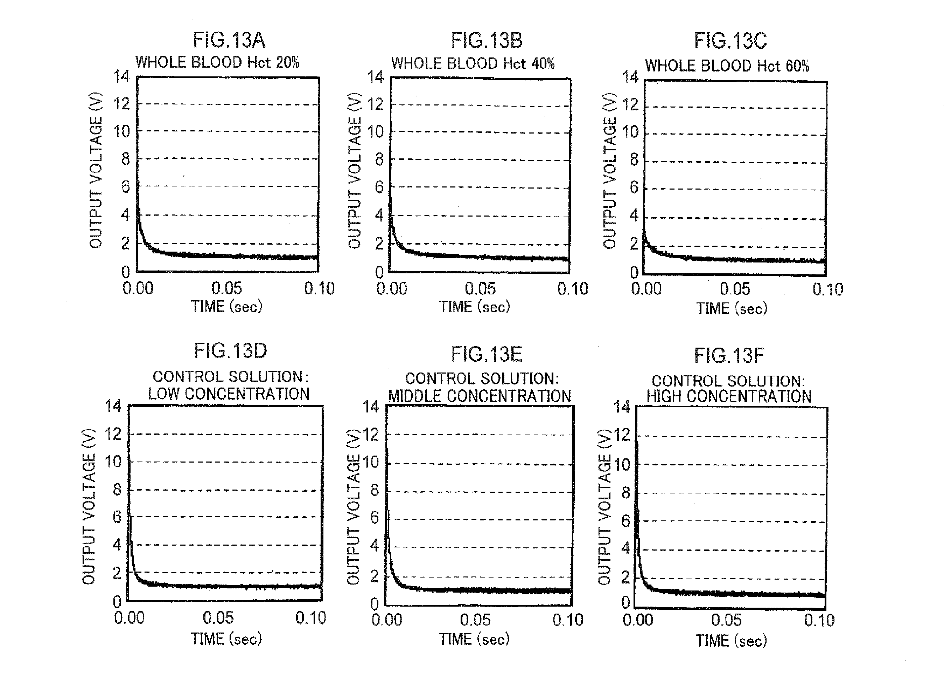

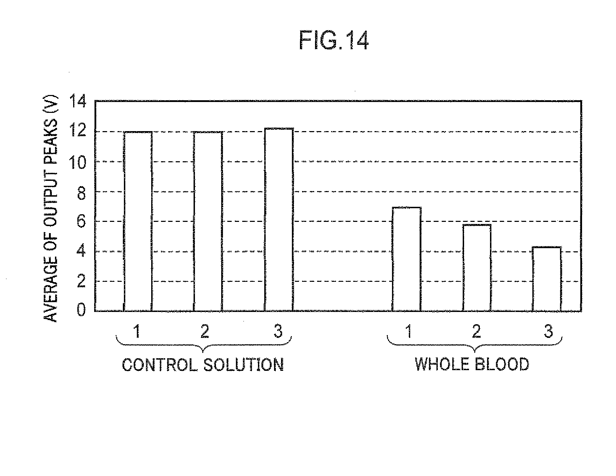

The response electric current was measured under the same condition as that of EXAMPLE 1 except that a constant voltage of 1 V (refer to Fig. 9B) was supplied to a pair of electrodes (detection electrode) of the X-SENSOR. The measurement result of the response electric current is shown in each of Figs. 13A to 13F as a time course. Further, an average of peak values when the response electric current is measured 5 times using a specimen having the same composition is shown in Fig. 14.

As shown in Figs. 13A to 13F, in both whole blood and the control solution, the output voltage (the response electric current) had instantaneously risen when the voltage was supplied, and then be stabilized into a constant value, result in a time course having a peak value. Meanwhile, the peak value of the output voltage (the response electric current) for the control solution (as shown in Figs. 13D to 13F) was larger than that for whole blood (as shown in Figs. 13A to 13C). Further, as shown in Fig. 14, an average of the peak values obtained through plural times for the control solution was larger than that for the whole blood. For this reason, it is considered that the control solution and whole blood can be distinguished based on the peak value of the output voltage (the response electric current) even when a constant voltage (a DC voltage) is supplied.

## Claims

1. A method of distinguishing between a control solution and a specimen in a system of analyzing a specific component within the specimen using an analysis tool, the method comprising:
a first step of measuring a response value when a voltage is applied between first and second electrodes in the analysis tool;
a second step of comparing a maximum value of the response value or a value associated with the maximum value to a predetermined threshold value; and
a third step of distinguishing between the specimen and the control solution based on a comparison result between the maximum value or the associated value and the threshold value.

2. The method according to claim 1, wherein in the first step, a voltage having a waveform including at least one pulse is applied.

3. The method according to claim 2, wherein in the first step, a voltage having a waveform including plural pulses is applied.

4. The method according to claim 3, wherein the waveform is an alternating waveform.

5. The method according to claim 1, the analysis tool further includes third and fourth electrodes that are used to analyze the specimen.

6. The method according to claim 1, wherein the specimen comprises whole blood, and the control solution comprises an electrolyte having a higher concentration than that of the whole blood.

7. An analyzer that analyzes a specific component within a specimen using an analysis tool, the analyzer comprising:
a power source that applies a voltage between first and second electrodes in the analysis tool;
a measurement unit that measures a response value when a voltage is applied between the first and second electrodes; and
a computation unit that distinguishes between the specimen and the control solution by comparing a maximum value of the response value or a value associated with the maximum value to a predetermined threshold value.

8. The analyzer according to claim 7, wherein the power source comprises an AC power source.
